(19) Europäisches Patentamt
European Patent Office
Office européen des brevets

(11) **EP 4 629 190 A1**

(12) **EUROPEAN PATENT APPLICATION**
published in accordance with Art. 153(4) EPC

(43) Date of publication:
**08.10.2025 Bulletin 2025/41**

(21) Application number: **23934986.3**

(22) Date of filing: **02.11.2023**

(51) International Patent Classification (IPC):
*G06V 10/774* (2022.01)    *G06V 10/764* (2022.01)
*G06V 10/766* (2022.01)    *G06V 10/82* (2022.01)
*G06T 7/00* (2017.01)

(52) Cooperative Patent Classification (CPC):
**G06T 7/00; G06V 10/764; G06V 10/766;
G06V 10/774; G06V 10/82**

(86) International application number:
**PCT/CN2023/129311**

(87) International publication number:
**WO 2024/221818 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.04.2023 CN 202310472315**

(71) Applicant: **Tencent Technology (Shenzhen)
Company Limited
Shenzhen, Guangdong 518057 (CN)**

(72) Inventor: **YIN, Xiaofei
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **DEFINITION IDENTIFICATION METHOD AND APPARATUS, MODEL TRAINING METHOD AND APPARATUS, AND DEVICE, MEDIUM AND PRODUCT**

(57)    Disclosed is a method for training a definition recognition model, performed by a computer device, the definition recognition model including a feature extraction network and a prediction network, and the method including: acquiring a content set comprising at least one pre-defined content, a sample content, and an annotated definition level of the sample content (302); performing unsupervised pre-training on the feature extraction network based on the pre-defined content to obtain a pre-trained feature extraction network (304); performing definition recognition on the sample content using the pre-trained feature extraction network and the prediction network, to obtain a predicted definition level (306); calculating a training loss based on the predicted definition level and the annotated definition level (308); and updating at least one of a plurality of model parameters of the pre-trained feature extraction network and/or the prediction network according to the training loss.

Acquire a pre-training content set, sample content, and a definition level annotation corresponding to the sample content — 302

Perform unsupervised pre-training on a feature extraction network based on content in a pre-training content set, to obtain a pre-trained feature extraction network — 304

Perform definition recognition on the sample content by using the pre-trained feature extraction network and a prediction network, to obtain a predicted definition level — 306

Calculate a training loss based on the predicted definition level and the definition level annotation — 308

Update at least part of model parameters of at least one of the pre-trained feature extraction network and the prediction network according to the training loss — 310

FIG. 3

**Description**

RELATED APPLICATION

This application claims priority to Chinese Patent Application No. 2023104723155, entitled "TRAINING METHOD AND APPARATUS FOR DEFINITION RECOGNITION MODEL, DEVICE, MEDIUM, AND PRODUCT" and filed on April 24, 2023, which is incorporated herein by reference in its entirety.

FIELD OF THE TECHNOLOGY

Embodiments of this application relate to the field of computer technologies, and in particular, to a method and apparatus for training a definition recognition model, a device, a medium, and a product.

BACKGROUND OF THE DISCLOSURE

In an information flow scenario, definition of content is of utmost importance. Generally, higher definition of content displayed by an application program is more likely to attract a user to click on the content, thereby increasing a use duration of the application program.

In a related technology, a definition recognition model is trained by using a manually annotated content data set. After the training is completed, content is inputted into the definition recognition model for determination, to obtain definition of the content.

In the foregoing technology, the training is performed by using the manually annotated content data set. Since time costs and labor costs of manual annotation are very high, a size of the manually annotated data set is limited, resulting in low accuracy of definition recognition of the content.

SUMMARY

This application provides a method and apparatus for training a definition recognition model, a device, a medium, and a product.

According to one aspect of this application, a method for training a definition recognition model is provided, performed by a computer device, the definition recognition model including a feature extraction network and a prediction network, and the method including:

acquiring a content set comprising at least one pre-defined content, a sample content, and an annotated definition level of the sample content;

performing unsupervised pre-training on the feature extraction network based on the pre-defined content to obtain a pre-trained feature extraction network;

performing definition recognition on the sample content using the pre-trained feature extraction network and the prediction network, to obtain a predicted definition level;

calculating a training loss based on the predicted definition level and the annotated definition level; and

updating at least one of a plurality of model parameters of the pre-trained feature extraction network and/or the prediction network according to the training loss.

According to one aspect of this application, a definition recognition method is provided, performed by a computer device, the method including:

acquiring content on which definition recognition is to be performed;

inputting the content into a pre-trained feature extraction network in a definition recognition model to perform feature extraction, to obtain a content feature, the pre-trained feature extraction network being obtained by performing unsupervised pre-training on a feature extraction network in the definition recognition model by using a content set; and

performing definition recognition on the content feature based on a prediction network in the definition recognition model, to obtain a definition level corresponding to the content.

According to one aspect of the present disclosure, an apparatus for training a definition recognition model is provided, the apparatus including:

an acquisition module configured to acquire content set comprising at least one pre-defined content, a sample content, and an annotated definition level of the sample content;

a pre-training module configured to perform unsupervised pre-training on the feature extraction network based on the pre-defined content, to obtain a pre-trained feature extraction network;

a recognition module configured to perform definition recognition on the sample content using the pre-trained feature extraction network and the prediction network, to obtain a predicted definition level;

a calculation module configured to calculate a training loss based on the predicted definition level and the annotated definition level; and

an update module configured to update at least one of a plurality of model parameters of the pre-trained feature extraction network and/or the prediction network according to the training loss.

According to one aspect of the present disclosure, a definition recognition apparatus is provided, the apparatus including:

an acquisition module configured to acquire content on which definition recognition is to be performed;

a feature extraction module configured to input the content into a pre-trained feature extraction network in a definition recognition model to perform feature extraction, to obtain a content feature, the pre-trained feature extraction network being obtained by performing unsupervised pre-training on a feature extraction network in the definition recognition model by using a content set; and

a recognition module configured to perform definition recognition on the content feature based on a prediction network in the definition recognition model, to obtain a definition level corresponding to the content.

According to another aspect of this application, a computer device is provided. The computer device includes: a processor and a memory. The memory has at least one computer-readable instruction stored therein, and the at least one computer-readable instruction is loaded and executed by the processor to implement the method for training a definition recognition model as described in the foregoing aspect or the definition recognition method as described in the foregoing aspect.

According to another aspect of this application, a computer storage medium is provided. The computer storage medium stores at least one computer-readable instruction, and the at least one computer-readable instruction is loaded and executed by a processor to perform the method for training a definition recognition model as described in the foregoing aspect or the definition recognition method as described in the foregoing aspect.

According to another aspect of this application, a computer program product is provided. The computer program product includes computer-readable instructions, and the computer-readable instructions are stored in a computer-readable storage medium. The computer-readable instructions are read from the computer-readable storage medium and executed by a processor of a computer device, causing the computer device to perform the method for training a definition recognition model as described in the foregoing aspect or the definition recognition method as described in the foregoing aspect.

Details of one or more embodiments of this application are provided in the accompanying drawings and descriptions below. Other features, objectives, and advantages of this application become apparent from the specification, the drawings, and the claims.

BRIEF DESCRIPTION OF THE DRAWINGS

To describe the technical solutions in the embodiments of this application or the conventional technology more clearly, the following briefly describes the accompanying drawings required for describing the embodiments or the conventional technology. Apparently, the accompanying drawings in the following descriptions show merely embodiments of this application, and a person of ordinary skill in the art may still derive other accompanying drawings from the disclosed accompanying drawings without creative efforts.

FIG. 1 is a schematic diagram of a method for training a definition recognition model according to an exemplary embodiment of this application.

FIG. 2 is a schematic architectural diagram of a computer system according to an exemplary embodiment of this application.

FIG. 3 is a flowchart of a method for training a definition recognition model according to an exemplary embodiment of this application.

FIG. 4 is a flowchart of a method for training a definition recognition model according to an exemplary embodiment of this application.

FIG. 5 is a schematic diagram of comparison between normal resolution and unified resolution according to an exemplary embodiment of this application.

FIG. 6 is a schematic diagram of distortion types in real distortion content according to an exemplary embodiment of this application.

FIG. 7 is a schematic diagram of content distortion degrees according to an exemplary embodiment of this application.

FIG. 8 is a schematic diagram of acquiring enhanced real distortion content according to an exemplary embodiment of this application.

FIG. 9 is a schematic diagram of acquiring enhanced generative distortion content according to an exemplary embodiment of this application.

FIG. 10 is a schematic diagram of unsupervised pre-training according to an exemplary embodiment of this application.

FIG. 11 is a framework diagram of generation of a definition recognition model training system and training of a definition recognition model according to an exemplary embodiment of this application.

FIG. 12 is a flowchart of a definition recognition method according to an exemplary embodiment of this application.

FIG. 13 is a flowchart of a definition recognition method according to an exemplary embodiment of this application.

FIG. 14 is a flowchart of a definition recognition method according to an exemplary embodiment of this application.

FIG. 15 is a block diagram of an apparatus for training a definition recognition model according to an exemplary embodiment of this application.

FIG. 16 is a schematic structural diagram of a definition recognition apparatus according to an exemplary embodiment of this application.

FIG. 17 is a schematic structural diagram of a computer device according to an exemplary embodiment of this application.

DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

First, several terms as referred to in the embodiments of this application are briefly introduced.

Artificial intelligence (AI) is a theory, method, technology, and application system that uses a digital computer or a machine controlled by the digital computer to simulate, extend, and expand human intelligence, perceive an environment, acquire knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

The CV technology is a field of science that studies how to use a machine to "see", and furthermore, that uses a camera and a computer to replace human eyes to perform machine vision such as recognition and measurement on a target, and further perform graphic processing, so that the computer processes the target into an image more suitable for human eyes to observe, or an image transmitted to an instrument for detection. As a scientific discipline, CV studies related theories and technologies and attempts to establish an AI system that can obtain information from images or multidimensional data. The CV technology generally includes technologies such as image processing, image recognition, image semantic understanding, image retrieval, video processing, video semantic understanding, video content/behavior recognition, three-dimensional object reconstruction, a 3D technology, virtual reality, enhanced reality, synchronous positioning, and map construction, and further include common biometric feature recognition technologies.

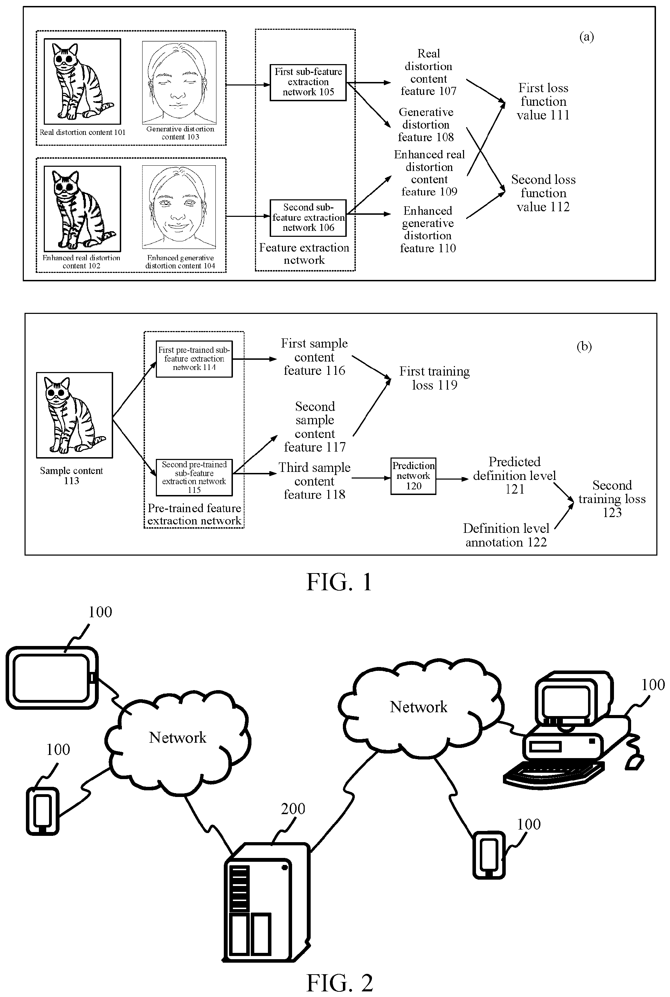

An embodiment of this application provides a method for training a definition recognition model. As shown in FIG. 1, the method may be performed by a computer device, and the computer device may be a terminal or a server.

For example, the computer device acquires a pre-training content set, sample content 113, and an annotated definition level 122 corresponding to the sample content 113. The computer device performs unsupervised pre-training on a feature extraction network based on content in the pre-training content set, to obtain a pre-trained feature extraction network. The computer device performs definition recognition on the sample content 113 by using the pre-trained feature extraction network and a prediction network 120, to obtain a predicted definition level 121. The computer device calculates a training loss based on the predicted definition level 121 and the annotated definition level 122. The computer device updates at least part of model parameters of at least one of the pre-trained feature extraction network and the prediction network 120 according to the training loss.

The pre-training content set is a data set including content, and the content is configured for performing unsupervised pre-training. The content may be graphical content such as a video or a picture, and may be referred to as multimedia content.

The unsupervised pre-training means that training samples do not include labels of labeled samples, that is, there are only input variables and no output variables with labels during the training.

In some embodiments, the pre-training content set includes real distortion content 101, generative distortion content 103, and reference content. The real distortion content 101 is content carrying a distortion type. For example, the distortion type in the real distortion content 101 is distortion caused by compression or loss during acquisition or storage of content. Distortion of the real distortion content 101 may be distortion generated by the content in a real application scenario.

The real distortion content 101 includes at least one of a real distortion picture and a real distortion video.

The generative distortion content 103 is content obtained after distortion processing is performed on the content. Generative distortion may be content obtained after distortion processing is performed on the content in a training stage. Distortion processing refers to a case in which image processing is performed on the content, so that a processed image is distorted compared with an image before the processing, for example, at least one of noise addition, compression, and blurring.

For example, the generative distortion content may be obtained after edge aliasing is generated during compression of the content. The generative distortion content may be obtained after white noise caused by addition of white Gaussian noise to the content. The generative distortion content may be obtained after pixel adhesion caused by Gaussian blur on the content, but is not limited thereto. The terms are not specifically limited in this embodiment of this application.

The reference content refers to content in the pre-training content set other than the real distortion content 101 and the generative distortion content 103. The reference content may be content that has not undergone processing that may cause distortion, or may be a native picture or video.

The annotated definition level 122 refers to a level of definition annotated for the sample content 113.

For example, the definition level includes 10 levels, and a higher level indicates higher definition of content.

As shown in (a) of FIG. 1, the computer device performs data processing on the real distortion content 101 and the generative distortion content 103 in the pre-training content set, to obtain enhanced real distortion content 102 corresponding to the real distortion content 101 and enhanced generative distortion content 104 corresponding to the generative distortion content 103.

The enhanced real distortion content 102 refers to content obtained after data processing is performed on the real distortion content 101. Compared with the real distortion content 101, in the content obtained after the data processing, at least one of a distortion type and a distortion degree is changed, and a content type is not changed.

The enhanced generative distortion content 104 refers to content obtained after data processing is performed on the generative distortion content 103. Compared with the generative distortion content 103, in the content obtained after the data processing, the content type is changed, and the distortion type and the distortion degree are not changed.

In some embodiments, each piece of content has a unique content type.

In some embodiments, the distortion type includes at least one of, but is not limited to, Gaussian blur, lens blur, motion blur, color diffusion, color shift, color quantization, color saturation (different color saturation may be distinguished by color saturation 1, color saturation 2, and the like), an image format joint photographic experts group (JPEG), an image format 2000 (JPEG2000), white noise, white noise in a color component, impulse noise, multiplicative noise, denoise, brighten, darken, mean shift, jitter, a non-eccentricity patch, pixelate, quantization, a color block, high sharpen, and a contrast change, which is not specifically limited in this embodiment of this application.

For example, the computer device performs feature extraction on the real distortion content 101 and the generative distortion content 103 based on a first sub-feature extraction network 105, to obtain a real distortion content feature 107 corresponding to the real distortion content 101 and a generative distortion feature 108 corresponding to the generative distortion content 103. The computer device performs feature extraction on the enhanced real distortion content 102 and the enhanced generative distortion content 104 based on a second sub-feature extraction network 106, to obtain an enhanced real distortion content feature 109 corresponding to the enhanced real distortion content 102 and an enhanced generative distortion feature 110 corresponding to the enhanced generative distortion content 104.

The computer device performs feature extraction on the reference content based on the first sub-feature extraction network 105 or the second sub-feature extraction network 106, to obtain a reference feature.

For example, after performing feature extraction on each piece of content, the computer device calculates a first loss function value 111 based on a first similarity between the real distortion content feature 107 and the enhanced real distortion content feature 109 and a second similarity between the real distortion content feature 107 and the reference feature. The computer device calculates a second loss function value 112 based on a third similarity between the generative distortion feature 108 and the enhanced generative distortion feature 110 and a fourth similarity between the generative distortion feature 108 and the reference feature. The computer device may acquire the third similarity between the generative distortion feature and the enhanced generative distortion feature; acquire the fourth similarity between the generative distortion feature and the reference feature; and calculate the second loss function value based on the third similarity and the fourth similarity.

The computer device adds the first loss function value 111 and the second loss function value 112, and updates at least part of network parameters of the feature extraction network based on a sum of the first loss function value 111 and the second loss function value 112, to obtain a pre-trained feature extraction network.

The pre-trained feature extraction network refers to a feature extraction network after pre-training on the feature extraction network is completed.

As shown in (b) in FIG. 1, after obtaining the pre-trained feature extraction network, the computer device further trains the definition recognition model.

The computer device inputs the sample content 113 respectively into a first pre-trained sub-feature extraction network 114 and a second pre-trained sub-feature extraction network 115 in the pre-trained feature extraction network for feature extraction, to obtain a first sample content feature 116, a second sample content feature 117, and a third sample content feature 118. The computer device performs definition level classification on the third sample content feature 118 based on the prediction network 120, to obtain the predicted definition level 121.

The first pre-trained sub-feature extraction network 114 is obtained by performing the unsupervised pre-training on the first sub-feature extraction network 105.

The second pre-trained sub-feature extraction network 115 is obtained by performing the unsupervised pre-training on the second sub-feature extraction network 106.

The first sample content feature 116 is a feature vector outputted by the first pre-trained sub-feature extraction network 114 and undergoing coefficient adjustment.

The second sample content feature 117 is a feature vector outputted by the second pre-trained sub-feature extraction network 115 and undergoing coefficient adjustment.

The third sample content feature 118 is a feature vector outputted by the second pre-trained sub-feature extraction network 115 and not undergoing coefficient adjustment.

The coefficient adjustment means dividing the content feature by an adjustable hyper-parameter. The selected hyper-parameter in this embodiment of this application is 4. The coefficient adjustment is configured for adjusting a trend of a loss function calculated between the content features to be stable.

The computer device obtains a first training loss 119 based on a relative entropy (also referred to as KL divergence) function value between the first sample content feature 116 and the second sample content feature 117.

The computer device performs definition level classification on the third sample content feature 118 based on a logistic regression function Sigmoid in the prediction network 120, and obtains a probability value of the third sample content feature 118 at each definition level. A definition level corresponding to a maximum probability value is selected and determined as a predicted definition level 121. The computer device obtains a second training loss 123 based on a cross-entropy function value between the predicted definition level 121 and the annotated definition level 122. The computer device updates at least part of model parameters of at least one of the pre-trained feature extraction network and the prediction network 120 according to the first training loss 119 and the second training loss 123.

In conclusion, in the method provided in this embodiment, the pre-training content set, the sample content, and the annotated definition level corresponding to the sample content are acquired; unsupervised pre-training is performed on the feature extraction network based on content in the pre-training content set, to obtain the pre-trained feature extraction network; definition recognition is performed on the sample content by using the pre-trained feature extraction network and the prediction network, to obtain the predicted definition level; the training loss is calculated based on the predicted definition level and the annotated definition level; and at least part of the model parameters of at least one of the pre-trained feature extraction network and the prediction network are updated according to the training loss. According to the method for training a definition recognition model provided in this application, unsupervised pre-training is performed on the feature extraction network in the definition recognition model by using the pre-training content set having a huge data volume, and after the pre-trained feature extraction network is obtained, the definition recognition model is further trained by using the sample content. Based on this, a training effect of the definition recognition model can be improved, so that the definition recognition model can have higher recognition accuracy when performing definition recognition on content.

FIG. 2 is a schematic architectural diagram of a computer system according to an embodiment of this application. The computer system may include: a terminal 100 and a server 200.

The terminal 100 may be an electronic device terminal such as a mobile phone, a tablet computer, a vehicle-mounted terminal (in-vehicle infotainment), a wearable device, a personal computer (PC), a smart voice interaction device, a smart home appliance, an aerial vehicle, or a self-service vending terminal. A client running a target application may be installed in the terminal 100. The target application may be an application that references definition recognition or another application that provides a definition recognition function, which is not limited in this application. In addition, in this application, the form of the target application is not limited, and includes, but is not limited to, an application (App), a mini program, or the like installed in the terminal 100, which may also be in the form of web pages.

The server 200 may be an independent physical server, or a server cluster or a distributed system including a plurality of physical servers, or may alternatively be a cloud server that provides a cloud computing service, a cloud database, cloud computing, a cloud function, cloud storage, a network service, cloud communication, a middleware service, a domain name service, a security service, a content delivery network (CDN), and a basic cloud computing service such as big data and an AI platform. The server 200 may be a backend server of the target application, and is configured to provide a backend service for a client of the target application.

The cloud technology refers to a hosting technology that unifies a series of resources such as hardware, software, and a network in a wide area network or a local area network, to implement data computing, storage, processing, and sharing. The cloud technology, a general term for a network technology, an information technology, an integration technology, a management platform technology, and an application technology that are applied based on a cloud computing business model, can form a resource pool and can be used on demand, which is flexible and convenient. The cloud computing technology is to become an important support. A backend service of a technical network system needs a large quantity of computing and storage resources, for example, video websites, image websites, and more portal websites. With the rapid development and application of the Internet industry, each item may have its own identification mark in the future, and the identification marks need to be transmitted to a backend system for logical processing. Data of different levels is processed separately, and all kinds of industry data require a strong system support, which can be achieved only through cloud computing.

In some embodiments, the server may alternatively be implemented as a node in a blockchain system. The blockchain is a new application mode of computer technologies such as distributed data storage, point-to-point transmission, a consensus mechanism, and an encryption algorithm. The blockchain is essentially a decentralized database, and is a string of a data block generated in a cryptographic manner. Each data block includes information about a batch of network transactions, which is configured for verifying validity of the information (anti-counterfeiting) and generating a next block. The blockchain may include a blockchain underlying platform, a platform product service layer, and an application service layer.

The terminal 100 and the server 200 may communicate with each other by using a network, for example, a wired or wireless network.

In the method for training a definition recognition model and the definition recognition method provided in the embodiments of this application, the operations may be performed by a computer device, and the computer device is an electronic device having data computing, processing, and storage capabilities. A solution implementation environment shown in FIG. 2 is taken as an example. The terminal 100 may perform the method for training a definition recognition model and the definition recognition method (for example, the client of the target application installed and running in the terminal 100 performs the method for training a definition recognition model and the definition recognition method), or the server 200 may perform the method for training a definition recognition model and the definition recognition method, or the terminal device 100 and the server 200 interact and cooperate to perform the method for training a definition recognition model and the definition recognition method, which is not limited in this application.

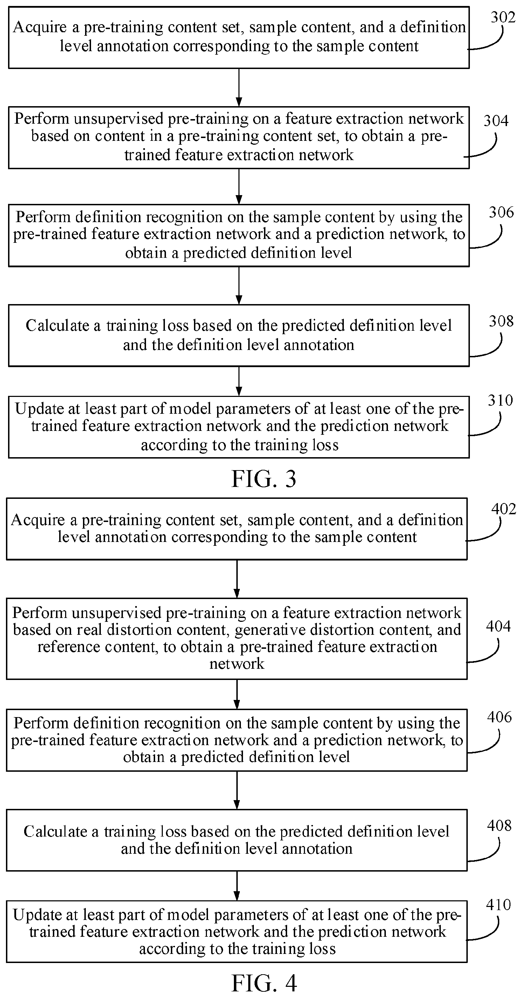

FIG. 3 is a flowchart of a method for training a definition recognition model according to an exemplary embodiment of this application. In embodiments of the present application, the definition recognition model may be an image definition recognition model. This method may be performed by a computer device, and the computer device may be the terminal 100 or the server 200 in FIG. 2. The method includes the following operations:

**Operation 302: Acquire a content set including at least one pre-defined content, a sample content, and an annotated definition level of sample content. In embodiments of the present application, operation 302 may include following operations: acquire a pre-training content set, sample content, and an image annotated definition level corresponding to the sample content.**

The pre-training content set is a data set including content configured for performing unsupervised pre-training. A quantity of the content in the pre-training content set is huge, and internal content does not require manual labeling.

In some embodiments, the content includes at least one of a picture, a video, and a video cover.

The annotated definition level refers to a level of definition annotated for the sample content.

For example, the definition level includes 10 levels, and a higher level indicates higher definition of content.

Manners of acquiring the content include at least one of the following cases:

1. The computer device receives the content, for example: the terminal is a terminal initiating content recording. Content is recorded by using the terminal, and after the recording ends, the content is used as the content in the pre-training content set or as the sample content.

2. The computer device acquires the content from a stored database.

The above manners of acquiring the content are merely exemplary, which are not limited in this embodiment of this application.

**Operation 304: Perform unsupervised pre-training on a feature extraction network based on pre-defined content, to obtain a pre-trained feature extraction network. In embodiments of the present application, operation 304 may include following operations: perform unsupervised pre-training on the feature extraction network based on content in the pre-training content set, to obtain a pre-trained feature extraction network.**

The unsupervised pre-training means that training samples do not include labels of labeled samples, that is, there are only input variables and no output variables with labels during the training.

The pre-trained feature extraction network refers to a feature extraction network after pre-training on the feature extraction network is completed.

The definition recognition model includes a feature extraction network and a prediction network. In some embodiments, the computer device performs unsupervised pre-training on the feature extraction network based on pictures in the pre-training content set, to obtain the pre-trained feature extraction network. The computer device performs unsupervised pre-training on the feature extraction network based on videos in the pre-training content set, to obtain the pre-trained feature extraction network.

**Operation 306: Perform definition recognition on the sample content using the pre-trained feature extraction network and a prediction network, to obtain a predicted definition level.**

The prediction network is configured to perform definition recognition on content and output a definition level obtained through prediction.

After performing unsupervised pre-training on the feature extraction network in the definition recognition model to obtain the pre-trained feature extraction network, the computer device trains the pre-trained feature extraction network and the prediction network in the definition recognition model by using the sample content and the annotated definition level corresponding to the sample content.

In a case that the sample content is a sample picture, the computer device performs definition recognition on the sample picture by using the pre-trained feature extraction network and the prediction network, to obtain a corresponding predicted definition level.

In a case that the sample content is a sample video, the computer device extracts a video frame in the sample video, and inputs the video frame into the pre-trained feature extraction network and the prediction network for definition recognition, to obtain a corresponding predicted definition level.

Operation 308: Calculate a training loss based on the predicted definition level and the annotated definition level.

The training loss refers to a difference between input and output of the definition recognition model, and definition recognition performance of the definition recognition model is measured by using the training loss.

For example, the sample content is inputted into the definition recognition model for definition recognition, to obtain a predicted definition level corresponding to the sample content, and the training loss is calculated based on the predicted definition level corresponding to the sample content and the annotated definition level corresponding to the sample content.

Operation 310: Update at least one of a plurality of model parameters of the pre-trained feature extraction network and/or the prediction network according to the training loss. In embodiments of the present application, operation 310 may include following operations: update at least part of model parameters of at least one of the pre-trained feature extraction network and the prediction network according to the training loss.

The updating of the model parameters refers to updating network parameters in the definition recognition model, or updating network parameters of network modules in the model, or updating network parameters of network layers in the model, but is not limited thereto, which is not limited in this embodiment of this application. The at least part of model parameters may include all model parameters or part of all the model parameters of the pre-trained feature extraction network, or may include all model parameters or part of all the model parameters of the prediction network. Specifically, when model parameters are updated, the model parameters related thereto may be determined according to the training loss. Specifically, the computer device may determine, by using a back propagation algorithm and based on the training loss, model parameters that need to be adjusted, and determine an adjustment range of the model parameters that need to be adjusted, so as to update the corresponding model parameters in the corresponding network according to the adjustment range.

In conclusion, in the method provided in this embodiment, the pre-training content set, the sample content, and the annotated definition level corresponding to the sample content are acquired; unsupervised pre-training is performed on the feature extraction network based on content in the pre-training content set, to obtain the pre-trained feature extraction network; definition recognition is performed on the sample content by using the pre-trained feature extraction network and the prediction network, to obtain the predicted definition level; the training loss is calculated based on the predicted definition level and the annotated definition level; and at least part of the model parameters of at least one of the pre-trained feature extraction network and the prediction network are updated according to the training loss. According to the method for training a definition recognition model provided in this application, unsupervised pre-training is performed on the feature extraction network in the definition recognition model by using the pre-training content set having a huge data volume, and after the pre-trained feature extraction network is obtained, the definition recognition model is further trained by using the sample content. Based on this, a training effect of the definition recognition model can be improved, so that the definition recognition model can have higher recognition accuracy when performing definition recognition on content.

An embodiment of this application provides a system for training a definition recognition model. A feature extraction network and a prediction network run in the system for training a definition recognition model.

The computer device acquires a pre-training content set, and performs unsupervised pre-training on the feature extraction network by using the pre-training content set, to obtain a pre-trained feature extraction network.

The computer device acquires sample content and an annotated definition level corresponding to the sample content. The computer device performs definition recognition on the sample content by using the pre-trained feature extraction network and the prediction network, to obtain a predicted definition level. The computer device calculates a training loss based on the predicted definition level and the annotated definition level. The computer device updates at least part of model parameters of at least one of the pre-trained feature extraction network and the prediction network according to the training loss.

A method for training a definition recognition model is provided as follows based on the system for training a definition recognition model.

FIG. 4 is a flowchart of a method for training a definition recognition model according to an exemplary embodiment of this application. This method may be performed by a computer device, and the computer device may be the terminal 100 or the server 200 in FIG. 2. The method includes the following operations:

**Operation 402: Acquire a pre-training content set, sample content, and an annotated definition level corresponding to the sample content.**

The pre-training content set is a data set including content configured for performing unsupervised pre-training. A quantity of the content in the pre-training content set is huge, and internal content does not require manual labeling.

In some embodiments, the content includes at least one of a picture and a video.

The annotated definition level refers to a level of definition annotated for the sample content.

For example, the definition level includes 10 levels, and a higher level indicates higher definition of content.

In some embodiments, the annotated definition level corresponding to the sample content is manually annotated.

To collect a rich pre-training content set so that the content in the pre-training content set includes distortion types and content types as many as possible, taking pictures as an example, in this embodiment of this application, the pre-training content set, when constructed, includes 84w pieces of generative distortion content and 100w pieces of real distortion content. The 84w pieces of generative distortion content are synthesized from 14w original pictures by using 25 conventional distortion processing algorithms. Each distortion type has five distortion degrees.

In some embodiments, the distortion type includes at least one of, but is not limited to, Gaussian blur, lens blur, motion blur, color diffusion, color shift, color quantization, color saturation 1, color saturation 2, an image format 2000 (JPEG2000), an image format JPEG, white noise, white noise in a color component, impulse noise, multiplicative noise, denoise, brighten, darken, mean shift, jitter, a non-eccentricity patch, pixelate, quantization, a color block, high sharpen, and a contrast change, which is not specifically limited in this embodiment of this application.

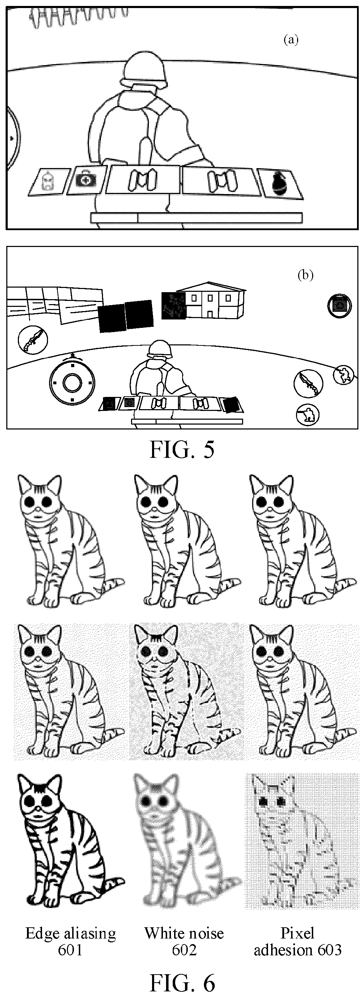

To make model training more accurate, 10w pieces of sample content are collected for annotated definition level. However, during the annotation, it is found that the acquired content has different resolution. FIG. 5 is a schematic diagram of comparisons between normal resolution and unified resolution. (a) in the figure shows original resolution of the content, and an image is excessively large. (b) in the figure shows content that is uniformly scaled and unified to the same resolution (1080*1920). In this embodiment of this application, a terminal equal-width principle is adopted, that is, the content is uniformly scaled to fit resolution of the same terminal.

**Operation 404: Perform unsupervised pre-training on a feature extraction network based on real distortion content, generative distortion content, and reference content, to obtain a pre-trained feature extraction network.**

The unsupervised pre-training means that training samples do not include labels of labeled samples, that is, there are only input variables and no output variables with labels during the training.

The pre-trained feature extraction network refers to a feature extraction network after pre-training on the feature extraction network is completed.

The pre-training content set includes real distortion content, generative distortion content, and reference content.

The real distortion content is content carrying a distortion type. For example, the distortion type in the real distortion content is distortion caused by compression or loss during acquisition or storage of content.

For example, FIG. 6 is a schematic diagram of distortion types in real distortion content. A distortion type in the first column in the figure is edge aliasing 601 generated during content compression, a distortion type in the second column in the figure is white noise 602 generated due to white Gaussian noise, and a distortion type in the third column in the figure is pixel adhesion 603 generated due to Gaussian blur. In fact, the distortion types in the real distortion content are often more complex, and there is more than one distortion type.

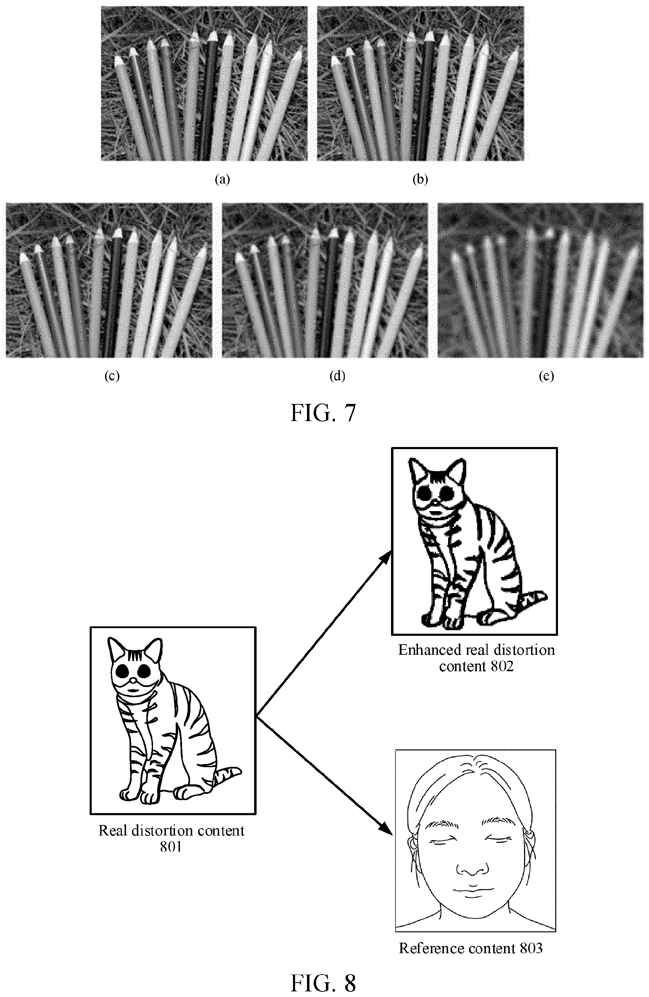

For example, FIG. 7 is a schematic diagram of content distortion degrees. (a) to (e) in the figure show five distortion degrees. As the distortion degree becomes deeper, definition of content gradually decreases.

The generative distortion content is content obtained after distortion processing is performed on the content. The generative distortion content includes at least one distortion type.

For example, the generative distortion content is obtained after edge aliasing is generated during compression of the content. The generative distortion content is obtained after white noise caused by addition of white Gaussian noise to the content. The generative distortion content is obtained after pixel adhesion caused by Gaussian blur on the content, but is not limited thereto. The terms are not specifically limited in this embodiment of this application.

The reference content refers to content in the pre-training content set other than the real distortion content and the generative distortion content.

For example, the computer device acquires the real distortion content, the generative distortion content, and the reference content in the pre-training content set. The computer device performs unsupervised pre-training on the feature extraction network based on the real distortion content, the generative distortion content, and the reference content, to obtain the pre-trained feature extraction network.

In some embodiments, the computer device acquires enhanced real distortion content corresponding to the real distortion content and enhanced generative distortion content corresponding to the generative distortion content. The computer device performs feature extraction respectively on the real distortion content, the enhanced real distortion content, and the reference content based on the feature extraction network, to obtain a real distortion content feature corresponding to the real distortion content, an enhanced real distortion content feature corresponding to the enhanced real distortion content, and a reference feature corresponding to the reference content. The computer device performs calculation based on the real distortion content feature, the enhanced real distortion content feature, and the reference feature, to obtain a first loss function value.

The computer device performs feature extraction respectively on the generative distortion content and the enhanced generative distortion content based on the feature extraction network, to obtain a generative distortion feature corresponding to the generative distortion content and an enhanced generative distortion feature corresponding to the enhanced generative distortion content. The computer device performs calculation based on the generative distortion feature, the enhanced generative distortion feature, and the reference feature, to obtain a second loss function value.

The computer device updates at least part of network parameters of the feature extraction network based on the first loss function value and the second loss function value, to obtain the pre-trained feature extraction network.

In some embodiments, the computer device adds the first loss function value and the second loss function value, and updates the network parameters of the feature extraction network based on a sum of the first loss function value and the second loss function value, to obtain the pre-trained feature extraction network.

The enhanced real distortion content refers to content obtained after data processing is performed on the real distortion content. Compared with the real distortion content, in the content obtained after the data processing, at least one of a distortion type and a distortion degree is changed, and a content type is not changed. The enhanced real distortion content may refer to content obtained by modifying the content type in the real distortion content without modifying the distortion type and the distortion degree.

For example, FIG. 8 is a schematic diagram of acquiring enhanced real distortion content, which includes real distortion content 801, enhanced real distortion content 802, and reference content 803. Upon comparison between the real distortion content 801 and the enhanced real distortion content 802, content type features are the same and distortion type features are similar. Upon comparison between the real distortion content 801 and the reference content 803, the content type features are different and the distortion type features are not similar. The enhanced real distortion content 802 in the figure is obtained by modifying at least one of the distortion type and the distortion degree without modifying the content type of the real distortion content 801.

In some embodiments, a manner of modifying at least one of the distortion type and the distortion degree includes at least one of scaling, blurring, and color change, but is not limited thereto, which is not specifically limited in this embodiment of this application.

The enhanced generative distortion content refers to content obtained after data processing is performed on the generative distortion content. Compared with the generative distortion content, in the content obtained after the data processing, the content type is changed, and the distortion type and the distortion degree are not changed. The enhanced generative distortion content may refer to content obtained by modifying the content type in the generative distortion content without modifying the distortion type and the distortion degree.

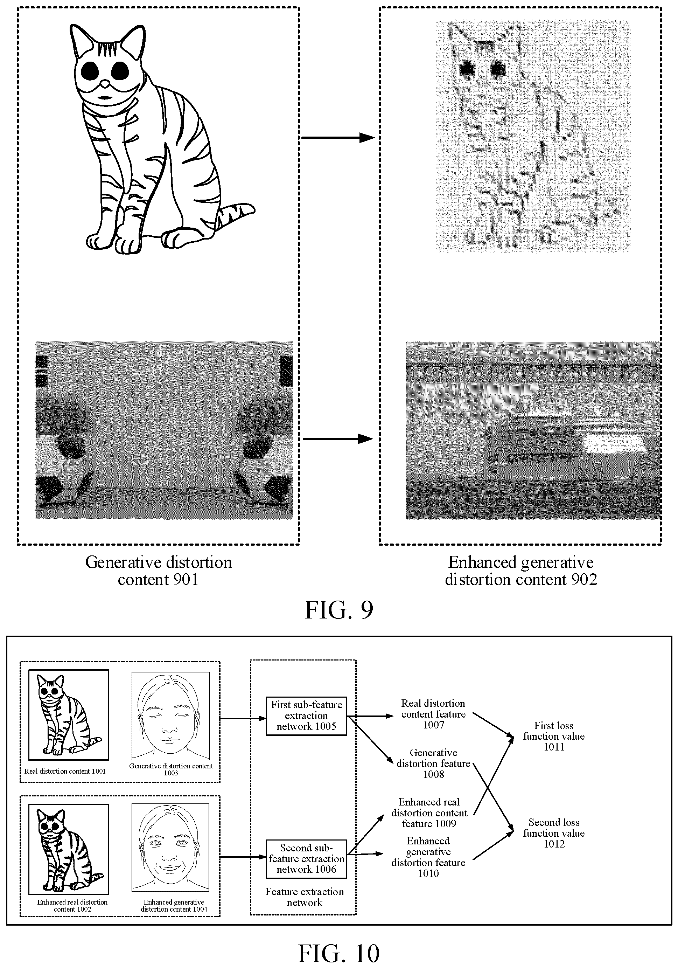

For example, FIG. 9 is a schematic diagram of acquiring enhanced generative distortion content, which includes generative distortion content 901 and enhanced generative distortion content 902. Upon comparison between the generative distortion content 901 and the enhanced generative distortion content 902, the content type features are different and the distortion type features are similar. The enhanced generative distortion content 902 in the figure is obtained by modifying the content type without modifying the distortion type and the distortion degree of the generative distortion content 901.

The feature extraction network includes a first sub-feature extraction network and a second sub-feature extraction network. The first sub-feature extraction network and the second sub-feature extraction network are two networks having a same structure and different parameters. For example, a quantity of structure layers in the first sub-feature extraction network is greater than a quantity of structure layers in the second sub-feature extraction network. That is, a feature extracted from the first sub-feature extraction network is more accurate than a feature extracted from the second sub-feature extraction network, and a volume of the first sub-feature extraction network is larger than a volume of the second sub-feature extraction network. Specifically, the first sub-feature extraction network may be much larger.

In some embodiments, a content feature includes at least one of a content type feature, a distortion type feature, and a distortion degree feature, but is not limited to thereto, which is not specifically limited in this embodiment of this application.

Specifically, the training a feature extraction network based on real distortion content includes:

performing, by the computer device, feature extraction on the real distortion content based on the first sub-feature extraction network, to obtain a real distortion content feature; performing, by the computer device, feature extraction on the enhanced real distortion content based on the second sub-feature extraction network, to obtain an enhanced real distortion content feature; and performing feature extraction on the reference content based on the first sub-feature extraction network or the second sub-feature extraction network, to obtain a reference feature.

In some embodiments, the computer device convolves the real distortion content based on a first convolutional layer in the first sub-feature extraction network, to obtain a corresponding real distortion content feature map. The computer device performs feature extraction on the real distortion content feature map based on a first feature extraction layer in the first sub-feature extraction network, to obtain the real distortion content feature. The computer device convolves the enhanced real distortion content based on a second convolutional layer in the second sub-feature extraction network, to obtain a corresponding enhanced real distortion content feature map. The computer device performs feature extraction on the enhanced real distortion content feature map based on a second feature extraction layer in the second sub-feature extraction network, to obtain the enhanced real distortion content feature.

In some embodiments, the feature extraction network uses a Swint self-attention model Swint-Transformer as a backbone network to extract a feature map. After the feature map is acquired, feature extraction is performed by using a multilayer perceptron (MLP), to obtain content features. The content features include a real distortion content feature, an enhanced real distortion content feature, a generative distortion feature, and an enhanced generative distortion feature.

In some embodiments, the feature extraction network may alternatively use a residual neural network ResNet as a backbone network to extract a feature map. After the feature map is obtained, feature extraction is performed by using a fully connected layer, to obtain content features.

The computer device calculates a first loss function value based on a first similarity between the real distortion content feature and the enhanced real distortion content feature and a second similarity between the real distortion content feature and the reference feature.

A calculation formula of the first loss function value may be expressed as:

$$L_p = -\log \frac{\exp(q * k_+/\tau)}{\sum_{i=0}^{k} \exp(q * k_i/\tau)}$$

where $L_p$ denotes the first loss function value, q denotes the real distortion content feature, $k_+$ denotes the enhanced real distortion content feature, $k_i$ denotes the reference feature, $\tau$ denotes a temperature coefficient, which is an adjustable hyper-parameter, and i denotes a content number.

Specifically, the training a feature extraction network based on generative distortion content includes: performing, by the computer device, feature extraction on the generative distortion content based on the first sub-feature extraction network, to obtain a generative distortion feature; and performing, by the computer device, feature extraction on the enhanced generative distortion content based on the second sub-feature extraction network, to obtain an enhanced generative distortion feature.

In some embodiments, the computer device convolves the generative distortion content based on the first convolutional layer in the first sub-feature extraction network, to obtain a corresponding generative distortion content feature map. The computer device performs feature extraction on the generative distortion content feature map based on the first feature extraction layer in the first sub-feature extraction network, to obtain the generative distortion feature. The computer device convolves the enhanced generative distortion content based on the second convolutional layer in the second sub-feature extraction network, to obtain a corresponding enhanced generative distortion content feature map. The computer device performs feature extraction on the enhanced generative distortion content feature map based on the second feature extraction layer in the second sub-feature extraction network, to obtain the enhanced generative distortion feature.

The computer device calculates a second loss function value based on a third similarity between the generative distortion feature and the enhanced generative distortion feature and a fourth similarity between the generative distortion feature and the reference feature.

A calculation formula of the second loss function value may be expressed as:

$$L_i = \frac{1}{|p(i)|} \sum_{j \in p(i)} -\log \frac{\exp(z_i * z_k/\tau)}{\sum_{k=0, k \neq i}^{2N} \exp(z_i * z_k/\tau)}$$

where $L_i$ denotes the second loss function value, $z_i$ denotes the generative distortion feature, $z_k$ denotes the enhanced generative distortion feature, $\tau$ denotes a temperature coefficient, which is an adjustable hyper-parameter, i denotes a content number, p(i) denotes a set of images having the same distortion type and the same distortion degree, and N is a quantity of content in the pre-training content set.

For example, FIG. 10 is a schematic diagram of unsupervised pre-training. The computer device performs data processing on real distortion content 1001 and generative distortion content 1003 in a pre-training content set, to obtain enhanced real distortion content 1002 corresponding to the real distortion content 1001 and enhanced generative distortion content 1004 corresponding to the generative distortion content 1003.

The computer device performs feature extraction on the real distortion content 1001 and the generative distortion content 1003 based on a first sub-feature extraction network 1005, to obtain a real distortion content feature 1007 corresponding to the real distortion content 1001 and a generative distortion feature 1008 corresponding to the generative distortion content 1003. The computer device performs feature extraction on the enhanced real distortion content 1002 and the enhanced generative distortion content 1004 based on a second sub-feature extraction network 1006, to obtain an enhanced real distortion content feature 1009 corresponding to the enhanced real distortion content 1002 and an enhanced generative distortion feature 1010 corresponding to the enhanced generative distortion content 1004.

After performing feature extraction on each piece of content, the computer device calculates a first loss function value 1011 based on a first similarity between the real distortion content feature 1007 and the enhanced real distortion content feature 1009 and a second similarity between the real distortion content feature 1007 and the reference feature. The computer device calculates a second loss function value 1012 based on a third similarity between the generative distortion feature 1008 and the enhanced generative distortion feature 1010 and a fourth similarity between the generative distortion feature 1008 and the reference feature.

The computer device adds the first loss function value 1011 and the second loss function value 1012, and updates network parameters of the feature extraction network based on a sum of the first loss function value 1011 and the second loss function value 1012, to obtain a pre-trained feature extraction network.

The computer device performs unsupervised pre-training on the feature extraction network by using the real distortion content and the generative distortion content, may sequentially input the real distortion content and the generative distortion content to perform unsupervised pre-training on the feature extraction network, or may input both the real distortion content and the generative distortion content to perform unsupervised pre-training on the feature extraction network.

**Operation 406: Perform definition recognition on the sample content by using the pre-trained feature extraction network and a prediction network, to obtain a predicted definition level.**

The prediction network is configured to perform definition recognition on content and output a definition level obtained through prediction.

After performing unsupervised pre-training on the feature extraction network in the definition recognition model, to obtain the pre-trained feature extraction network, the computer device trains the pre-trained feature extraction network and the prediction network in the definition recognition model by using the sample content and the annotated definition level corresponding to the sample content.

The pre-trained feature extraction network includes a first pre-trained sub-feature extraction network and a second pre-trained sub-feature extraction network.

The first pre-trained sub-feature extraction network is obtained by performing unsupervised pre-training on the first sub-feature extraction network.

The second pre-trained sub-feature extraction network is obtained by performing unsupervised pre-training on the second sub-feature extraction network.

For example, the computer device inputs the sample content respectively into the first pre-trained sub-feature extraction network and the second pre-trained sub-feature extraction network in the pre-trained feature extraction network for feature extraction, to obtain a first sample content feature, a second sample content feature, and a third sample content feature. The computer device performs definition level classification on the third sample content feature based on the prediction network, to obtain the predicted definition level.

The first sample content feature is a feature vector outputted by the first pre-trained sub-feature extraction network and undergoing coefficient adjustment.

The second sample content feature is a feature vector outputted by the second pre-trained sub-feature extraction network and undergoing coefficient adjustment.

The third sample content feature is a feature vector outputted by the second pre-trained sub-feature extraction network and not undergoing coefficient adjustment.

The coefficient adjustment means dividing the content feature by an adjustable hyper-parameter. The coefficient adjustment is configured for adjusting a trend of a loss function calculated between the content features to be stable.

**Operation 408: Calculate a training loss based on the predicted definition level and the annotated definition level.**

The training loss refers to a difference between input and output of the definition recognition model, and definition recognition performance of the definition recognition model is measured by using the training loss.

For example, the sample content is inputted into the definition recognition model for definition recognition, to obtain a predicted definition level corresponding to the sample content, and the training loss is calculated based on the predicted definition level corresponding to the sample content and the annotated definition level corresponding to the sample content.

The computer device obtains a first training loss based on a relative entropy (also referred to as KL divergence) function value between the first sample content feature and the second sample content feature.

A calculation formula of the first training loss may be expressed as:

$$D_{KL}(A\|B) = \sum_i p_A(v_i) \log p_A(v_i) - p_A(v_i) \log p_B(v_i)$$

where $D_{KL}$ denotes the first training loss, $(A\|B)$ denotes relative entropy between the first sample content feature and the second sample content feature, $p_A(v_i)$ denotes the first sample content feature, and $p_B(v_i)$ denotes the second sample content feature.

The computer device performs definition level classification on the third sample content feature based on a logistic regression function Sigmoid in the prediction network, and obtains a probability value of the third sample content feature at each definition level. A definition level corresponding to a maximum probability value is selected and determined as the predicted definition level. The computer device obtains a second training loss based on a cross-entropy function value between the predicted definition level and the annotated definition level.

A calculation formula of the second training loss may be expressed as:

$$H(C, D) = -\sum_i p_C(v_i) \log p_D(v_i)$$

where $H(C,D)$ denotes the second training loss, $p_C(v_i)$ denotes the predicted definition level, and $p_D(v_i)$ denotes the annotated definition level.

The feature extraction network includes a first sub-feature extraction network and a second sub-feature extraction network. The first sub-feature extraction network and the second sub-feature extraction network are two networks having a same structure and different parameters. For example, a quantity of structure layers in the first sub-feature extraction network is greater than a quantity of structure layers in the second sub-feature extraction network. That is, a feature extracted from the first sub-feature extraction network is more accurate than a feature extracted from the second sub-feature extraction network, and a volume of the first sub-feature extraction network is larger than a volume of the second sub-feature extraction network. Moreover, the first sub-feature extraction network is much larger.

The feature extracted from the first sub-feature extraction network is more accurate than the feature extracted from the second sub-feature extraction network. A purpose of the first training loss is to drive, by using the first sub-feature extraction network, the second sub-feature extraction network to complete training. A purpose of the second training loss is to train the prediction network by using the cross-entropy function value between the predicted definition level and the annotated definition level.

In actual application after training is completed, since the volume of the second sub-feature extraction network is smaller, only the second sub-feature extraction network may be used for feature extraction, or both the first sub-feature extraction network and the second sub-feature extraction network may be used for feature extraction.

**Operation 410: Update at least part of model parameters of at least one of the pre-trained feature extraction network and the prediction network according to the training loss.**

For example, the computer device may update at least part of model parameters of at least one of the pre-trained feature extraction network and the prediction network according to the first training loss and the second training loss.

In some embodiments, the computer device may update at least part of model parameters of at least one of the pre-trained feature extraction network and the prediction network according to a sum of the first training loss and the second training loss.

The updating of the model parameters refers to updating network parameters in the definition recognition model, or updating network parameters of network modules in the model, or updating network parameter of network layers in the model, but is not limited thereto, which is not limited in this embodiment of this application.

Network parameters in the definition recognition model are updated based on a loss function value by using the loss function value as a training indicator until the loss function value converges, to obtain a trained definition recognition model.

"The loss function value converges" means that the loss function value no longer changes, or an error difference between two adjacent iterations during training of the definition recognition model is less than a preset value, or a quantity of times of training of the definition recognition model reaches a preset quantity of times, but is not limited thereto, which is not limited in this embodiment of this application.

In some embodiments, a target condition satisfied by the training may be that a quantity of times of iterations of training of an initial model reaches a target quantity of times. A technician may preset the quantity of times of iterations of training. Alternatively, the target condition satisfied by the training may be that a loss value satisfies a target threshold condition, for example, the loss value is less than 0.00001, but is not limited thereto, which is not limited in this embodiment of this application.

In conclusion, in the method provided in this embodiment, the pre-training content set, the sample content, and the annotated definition level corresponding to the sample content are acquired; unsupervised pre-training is performed on the feature extraction network based on content in the pre-training content set, to obtain the pre-trained feature extraction network; definition recognition is performed on the sample content by using the pre-trained feature extraction network and the prediction network, to obtain the predicted definition level; the training loss is calculated based on the predicted definition level and the annotated definition level; and at least part of the model parameters of at least one of the pre-trained feature extraction network and the prediction network are updated according to the training loss. According to the method for training a definition recognition model provided in this application, unsupervised pre-training is performed on the feature extraction network in the definition recognition model by using the pre-training content set having a huge data volume, and after the pre-trained feature extraction network is obtained, the definition recognition model is further trained by using the sample content. Based on this, a training effect of the definition recognition model can be improved, so that the definition recognition model can have higher recognition accuracy when performing definition recognition on content.

According to the method provided in this embodiment, unsupervised pre-training is performed on the feature extraction network based on the real distortion content, the generative distortion content, and the reference content in the pre-training content set, to obtain the pre-trained feature extraction network. Unsupervised pre-training is performed on the feature extraction network in the definition recognition model by using the pre-training content set having a huge data volume, thereby improving training efficiency of the feature extraction network, and preventing the problem of low training efficiency caused by manual labeling.

According to the method provided in this embodiment, the content type, the distortion type, and the distortion degree of the real distortion content and the generative distortion content are modified, to obtain the enhanced real distortion content corresponding to the real distortion content and the enhanced generative distortion content corresponding to the generative distortion content. The feature extraction network can focus on learning a feature of the content type during the training by using the real distortion content and the enhanced real distortion content corresponding thereto, and the feature extraction network can focus on learning a feature of the distortion type during the training by using the generative distortion content and the enhanced generative distortion content corresponding thereto, thereby improving a feature extraction capability of the feature extraction network and improving training efficiency of the feature extraction network.

According to the method provided in this application, after the pre-trained feature extraction network is obtained, the definition recognition model is further trained by using the sample content. Based on this, a training effect of the definition recognition model can be improved, so that the definition recognition model can have higher recognition accuracy when performing definition recognition on content.

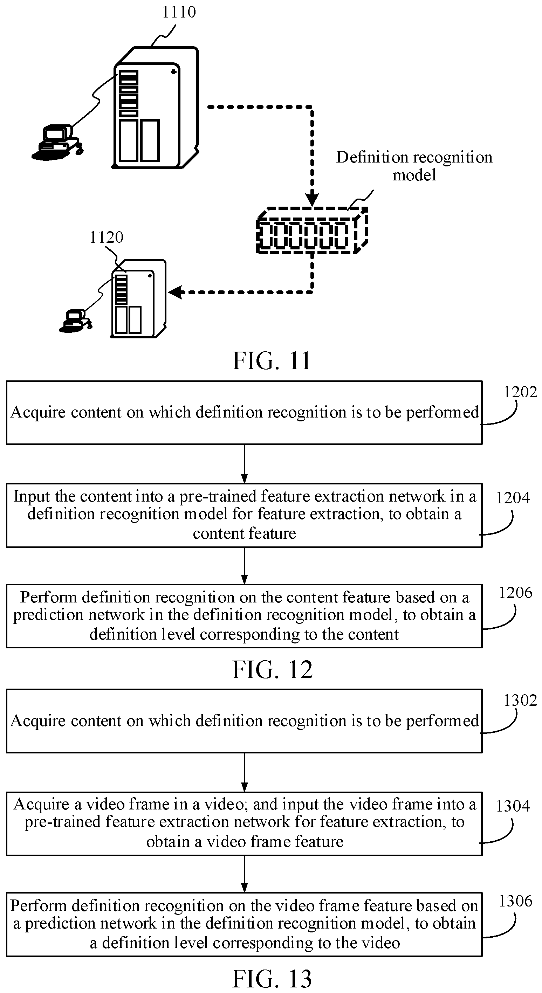

The method for training a definition recognition model as referred to in this application may be implemented based on a definition recognition model training system. The solution includes a definition recognition model training system generation stage and a definition recognition model training stage. FIG. 11 is a framework diagram of generation of a definition recognition model training system and training of a definition recognition model according to an exemplary embodiment of this application. As shown in FIG. 11, in the definition recognition model training system generation stage, after a definition recognition model training system generation device 1110 obtains the definition recognition model training system by using a preset pre-training content set and sample content, a training result of the definition recognition model is generated based on the definition recognition model training system. In the definition recognition model training stage, a definition recognition model training device 1120 processes inputted content based on the definition recognition model training system, to obtain a training result of the definition recognition model.

The definition recognition model training system generation device 1110 and the definition recognition model training device 1120 above may be computer devices. For example, the computer devices may be fixed computer devices such as personal computers or servers, or the computer devices may alternatively be mobile computer devices such as tablet computers or e-book readers.

In some embodiments, the definition recognition model training system generation device 1110 and the definition recognition model training device 1120 above may be the same device, or the definition recognition model training system generation device 1110 and the definition recognition model training device 1120 may alternatively be different devices. Moreover, when the definition recognition model training system generation device 1110 and the definition recognition model training device 1120 are different devices, the definition recognition model training system generation device 1110 and the definition recognition model training device 1120 may be the same type of devices. For example, both the definition recognition model training system generation device 1110 and the definition recognition model training device 1120 may be servers. Alternatively, the definition recognition model training system generation device 1110 and the definition recognition model training device 1120 may be different types of devices. For example, the definition recognition model training system training device 1120 may be a personal computer or a terminal, and the definition recognition model training system generation device 1110 may be a server. Specific types of the definition recognition model training system generation device 1110 and the definition recognition model training device 1120 are not limited in this embodiment of this application.

The method for training a definition recognition model is described in the foregoing embodiments. A definition recognition method based on a definition recognition model is described below. The definition recognition method provided in this embodiment of this application may also be applied to an image definition recognition scenario, a video definition recognition scenario, and a video cover definition recognition scenario.

FIG. 12 is a flowchart of a definition recognition method according to an exemplary embodiment of this application. This method may be performed by a computer device, and the computer device may be the terminal 100 or the server 200 in FIG. 2. The method includes the following operations:

**Operation 1202: Acquire content on which definition recognition is to be performed.**

The content includes at least one of a picture, a video, and a video cover.

Manners of acquiring the content include at least one of the following cases:

1. The computer device receives the content, for example: the terminal is a terminal initiating content recording. Content is recorded by using the terminal, and after the recording ends, the content is used as the content on which definition recognition is to be performed.

2. The computer device acquires, from a stored database, the content on which definition recognition is to be performed.

The above manners of acquiring the content are merely exemplary, which are not limited in this embodiment of this application.

**Operation 1204: Input the content into a pre-trained feature extraction network in a definition recognition model for feature extraction, to obtain a content feature.**

The definition recognition model includes a feature extraction network and a prediction network.

The pre-trained feature extraction network is obtained by performing unsupervised pre-training on a feature extraction network in the definition recognition model by using a content set.

For training processes of the feature extraction network and the prediction network, refer to operation 402 to operation 410 in the foregoing embodiments, and details are not described again.

For example, the computer device inputs the content into the pre-trained feature extraction network in the definition recognition model for feature extraction, to obtain the content feature.

**Operation 1206: Perform definition recognition on the content feature based on a prediction network in the definition recognition model, to obtain a definition level corresponding to the content.**

The definition recognition refers to rating definition of the content based on the content feature corresponding to the content.

The definition level refers to a rating for the definition of the content.

For example, the definition level includes 10 levels, and a higher level indicates higher definition of content.

For example, after acquiring the content feature corresponding to the content, the computer device performs definition recognition on the content feature based on the prediction network in the definition recognition model, to obtain the definition level corresponding to the content.

In conclusion, according to the method provided in this embodiment, the content feature corresponding to the content is acquired, and the content feature is inputted into the definition recognition model for definition recognition, to obtain the definition level corresponding to the content. Based on a trained definition recognition model, a higher-precision definition level result can be obtained.

FIG. 13 is a flowchart of a definition recognition method according to an exemplary embodiment of this application. This method may be performed by a computer device, and the computer device may be the terminal 100 or the server 200 in FIG. 2. The method includes the following operations:

**Operation 1302: Acquire content on which definition recognition is to be performed.**

The content includes at least one of a picture, a video, and a video cover.

**Operation 1304: Acquire a video frame in a video; and input the video frame into a pre-trained feature extraction network for feature extraction, to obtain a video frame feature.**

The definition recognition model includes a feature extraction network and a prediction network.

The pre-trained feature extraction network is obtained by performing unsupervised pre-training on a feature extraction network in the definition recognition model by using a pre-training content set.

For training processes of the feature extraction network and the prediction network, refer to operation 402 to operation 410 in the foregoing embodiments, and details are not described again.

For example, when the content is a video, the computer device acquires a video frame in the video; and inputs the video frame into the pre-trained feature extraction network for feature extraction, to obtain a video frame feature.

**Operation 1306: Perform definition recognition on the video frame feature based on a prediction network in the definition recognition model, to obtain a definition level corresponding to the video.**

The definition recognition refers to rating definition of the content based on the content feature corresponding to the content.

The definition level refers to a rating for the definition of the content.

For example, after acquiring a video feature corresponding to the video, the computer device performs definition level classification on the video frame feature based on a logistic regression function Sigmoid in the prediction network, and obtains a probability value of the video frame feature at each definition level. The computer device determines, according to the probability value, a video frame definition level corresponding to each video frame. The computer device aggregates the video frame definition levels to obtain the definition level corresponding to the video.

In some embodiments, the computer device groups the video frames on which definition recognition is to be performed, and determines video frame definition levels corresponding to the video frames in each group; and performs single-weighted average processing on the video frame definition levels in each group, to obtain a video frame group definition level corresponding to each group. The computer device performs double-weighted average processing on the video frame group definition levels corresponding to the groups, to obtain the definition level corresponding to the video.

A formula of the single-weighted average processing may be expressed as:

$$EMA_N(x_n) = \frac{2x_n + (N-1)EMA_N(x_{n-1})}{N+1}$$

where $x_n$ denotes a definition level of an $n^{th}$ video frame, and $EMA_N(x_n)$ denotes a definition level of a video frame group. Each video frame group includes N video frames.

A formula of the double-weighted average processing may be expressed as:

$$EMA_M[EMA_N(x_n)] = \frac{(M-1)EMA_M[x_n] - (N-1)EMA_N(x_n)}{M-N}$$

where $x_n$ denotes a definition level of an $n^{th}$ video frame, $EMA_N(x_n)$ denotes a definition level of a video frame group, the video frame group includes N video frames, and $EMA_M[EMA_N(x_n)]$ denotes a definition level corresponding to a video including M groups of video frames.

For example, a duration of a video is 100 seconds. If one second is used as one frame, there are 100 frames. Extracted video frames are classified into M groups in chronological order according to each group including N frames. First, a definition level of each video frame is recorded, and the definition levels of the video frames are aggregated, to obtain a definition level of each group. Then, the definition levels of the groups are aggregated, to finally obtain a definition level corresponding to the entire video.

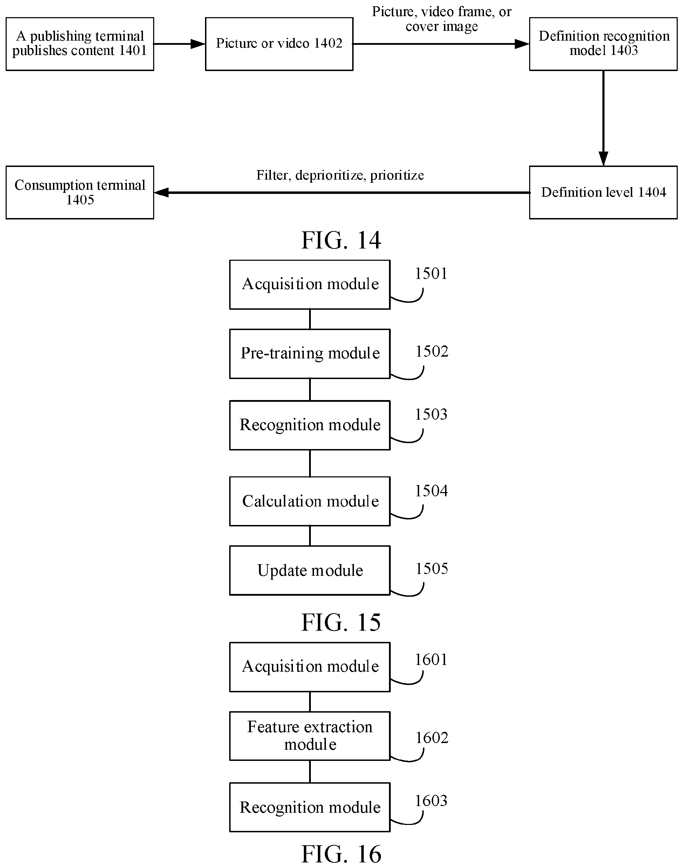

For example, in a flowchart of a definition recognition method shown in FIG. 14, after an account on a distribution terminal publishes content 1401, the computer device saves a picture/video 1402 in the content 1401. When the content 1401 is a video, the computer device extracts a video frame and a cover image of the video, and inputs the video frame and the cover image of the video into a trained definition recognition model 1403 for definition recognition, to obtain a corresponding definition level 1404. The definition level is classified into Level 10. In an application scenario in which the video has a cover image, when a definition level of the cover image is less than or equal to Level 4, the video is directly filtered. That is, the video is not recommended to a consumption terminal 1405. In an immersive scenario in which the video has no cover image and the video is directly played, when a definition level corresponding to the entire video is less than or equal to Level 3, the video is directly filtered. That is, the video is not recommended to the consumption terminal 1405. In a case that the definition level corresponding to the entire video is between Level 3 and Level 7, distribution of the video is deprioritized. That is, recommendations of the video to the consumption terminal 1405 are reduced. In a case that the definition level corresponding to the entire video is greater than Level 7, the distribution of the video is prioritized. That is, the recommendations of the video to the consumption terminal 1405 are increased.

For example, in actual application of the trained definition recognition model, 1.5w videos whose definition levels are less than or equal to Level 3 may be filtered each day.

After distribution of low-definition content is deprioritized, for videos whose distribution is deprioritized, there may be a decrease of 0.0345% in per capita video views (VV) for low definition levels, an increase of 0.7628% in per capita watch time on the content, an increase of 0.0703% in a next-day retention rate (a likelihood of recommending the same video the next day), an increase of 0.1123% in a quantity of logged-in users on the consumption terminal, and an increase of 0.5157% in a content exposure rate. Regarding influences on a distribution structure: a per capita VV proportion of key creators is increased by 0.9974%, a per capita VV proportion of professionally-generated content (PGC) is increased by 3.6621%, and a per capita VV proportion of user-generated content (UGC) is increased by 1.1916%.

After content that has low definition and causes noticeable discomfort is filtered and distributed, the per capita VV is decreased by 0.6715%, the per capita watch time on the content is increased by 0.0359%, the next-day retention rate is increased by 0.0844%, and the quantity of the logged-in users on the consumption terminals is increased by 0.2027%. Regarding the influences on the distribution structure: the per capita VV proportion of the key creators is increased by 2.2221%, a per capita VV proportion of featured content is increased by 0.8871%, a per capita revenue from content is increased by 1.1093%, the total watch time per capita of high-end users is increased by 1.67%, playback time per capita of the high-end users is increased by 2.32%, and per capita VV of the high-end users is increased by 3.38%.

By dispersing and avoiding continuous recommendations of the low-definition content, the per capita VV is decreased by 1.69%.

In conclusion, according to the method provided in this embodiment, the video feature corresponding to the video is acquired, and the video feature is inputted into the definition recognition model for definition recognition, to obtain the definition level corresponding to the video. Based on a trained definition recognition model, a higher-precision definition level result can be obtained.

FIG. 15 is a schematic structural diagram of an apparatus for training a definition recognition model according to an exemplary embodiment of this application. The apparatus may be implemented as all or part of a computer device through software, hardware, or a combination thereof. The apparatus includes:

an acquisition module 1501 configured to acquire a content set comprising at least one pre-defined content, a sample content, and an annotated definition level of the sample content;

a pre-training module 1502 configured to perform unsupervised pre-training on the feature extraction network based on the pre-defined content, to obtain a pre-trained feature extraction network;

a recognition module 1503 configured to perform definition recognition on the sample content using the pre-trained feature extraction network and the prediction network, to obtain a predicted definition level;

a calculation module 1504 configured to calculate a training loss based on the predicted definition level and the annotated definition level; and

an update module 1505 configured to update at least one of a plurality of model parameters of the pre-trained feature extraction network and/or the prediction network according to the training loss.

In a possible implementation, the acquisition module 1501 is configured to acquire real distortion content, generative distortion content, and reference content in the pre-training content set. The real distortion content is content carrying a distortion type. The generative distortion content is content obtained after distortion processing is performed on the content. The reference content is content other than the real distortion content and the generative distortion content.

In a possible implementation, the pre-training module 1502 is configured to perform the unsupervised pre-training on the feature extraction network based on the real distortion content, the generative distortion content, and the reference content, to obtain the pre-trained feature extraction network.

In a possible implementation, the acquisition module 1501 is configured to acquire enhanced real distortion content corresponding to the real distortion content and enhanced generative distortion content corresponding to the generative distortion content, wherein when the enhanced real distortion content is compared with the real distortion content, at least one of a distortion type and a distortion degree is changed, and a content type is not changed, and when the enhanced generative distortion content is compared with the generative distortion content, the content type is changed, and the distortion type and the distortion degree are not changed.

In a possible implementation, the pre-training module 1502 is configured to perform feature extraction respectively on the real distortion content, the enhanced real distortion content, and the reference content based on the feature extraction network, to obtain a real distortion content feature corresponding to the real distortion content, an enhanced real distortion content feature corresponding to the enhanced real distortion content, and a reference feature corresponding to the reference content; and perform calculation based on the real distortion content feature, the enhanced real distortion content feature, and the reference feature, to obtain a first loss function value.

In a possible implementation, the pre-training module 1502 is configured to perform feature extraction respectively on the generative distortion content and the enhanced generative distortion content based on the feature extraction network, to obtain a generative distortion feature corresponding to the generative distortion content and an enhanced generative distortion feature corresponding to the enhanced generative distortion content; and perform calculation based on the generative distortion feature, the enhanced generative distortion feature, and the reference feature, to obtain a second loss function value.

In a possible implementation, the update module 1505 is configured to update at least part of the model parameters in the feature extraction network based on the first loss function value and the second loss function value, to obtain the pre-trained feature extraction network.

In a possible implementation, the pre-training module 1502 is configured to perform feature extraction on the real distortion content based on the first sub-feature extraction network, to obtain the real distortion content feature; perform feature extraction on the enhanced real distortion content based on the second sub-feature extraction network, to obtain the enhanced real distortion content feature; and perform feature extraction on the reference content based on the first sub-feature extraction network or the second sub-feature extraction network, to obtain the reference feature.

In a possible implementation, the pre-training module 1502 is configured to convolve the real distortion content based on a first convolutional layer in the first sub-feature extraction network, to obtain a corresponding real distortion content feature map; and perform feature extraction on the real distortion content feature map based on a first feature extraction layer in the first sub-feature extraction network, to obtain the real distortion content feature.

In a possible implementation, the pre-training module 1502 is configured to convolve the enhanced real distortion content based on a second convolutional layer in the second sub-feature extraction network, to obtain a corresponding enhanced real distortion content feature map; and perform feature extraction on the enhanced real distortion content feature map based on a second feature extraction layer in the second sub-feature extraction network, to obtain the enhanced real distortion content feature.

In a possible implementation, the calculation module 1504 is configured to calculate the first loss function value based on a first similarity between the real distortion content feature and the enhanced real distortion content feature and a second similarity between the real distortion content feature and the reference feature.

In a possible implementation, the pre-training module 1502 is configured to perform feature extraction on the generative distortion content based on the first sub-feature extraction network, to obtain the generative distortion feature; and perform feature extraction on the enhanced generative distortion content based on the second sub-feature extraction network, to obtain the enhanced generative distortion feature.

In a possible implementation, the pre-training module 1502 is configured to convolve the generative distortion content based on a first convolutional layer in the first sub-feature extraction network, to obtain a corresponding generative distortion content feature map; and perform feature extraction on the generative distortion content feature map based on a first feature extraction layer in the first sub-feature extraction network, to obtain the generative distortion feature.

In a possible implementation, the pre-training module 1502 is configured to convolve the enhanced generative distortion content based on a second convolutional layer in the second sub-feature extraction network, to obtain a corresponding enhanced generative distortion content feature map; and perform feature extraction on the enhanced generative distortion content feature map based on a second feature extraction layer in the second sub-feature extraction network, to obtain the enhanced generative distortion feature.

In a possible implementation, the calculation module 1504 is configured to calculate the second loss function value based on a third similarity between the generative distortion feature and the enhanced generative distortion feature and a fourth similarity between the generative distortion feature and the reference feature.

In a possible implementation, the recognition module 1503 is configured to input the sample content respectively into the first pre-trained sub-feature extraction network and the second pre-trained sub-feature extraction network for feature extraction, to obtain a first sample content feature, a second sample content feature, and a third sample content feature; the first sample content feature being a feature vector outputted by the first pre-trained sub-feature extraction network and undergoing coefficient adjustment, the second sample content feature being a feature vector outputted by the second pre-trained sub-feature extraction network and undergoing coefficient adjustment, and the third sample content feature being a feature vector outputted by the second pre-trained sub-feature extraction network and not undergoing coefficient adjustment; perform definition level classification on the third sample content feature based on a logistic regression function in the prediction network, to obtain a probability value of the third sample content feature at each definition level; and determine the predicted definition level according to the probability value.

In a possible implementation, the calculation module 1504 is configured to obtain the first training loss based on a relative entropy function value between the first sample content feature and the second sample content feature.

In a possible implementation, the calculation module 1504 is configured to obtain the second training loss based on a cross-entropy function value between the predicted definition level and the annotated definition level.

In a possible implementation, the calculation module 1504 is configured to obtain the training loss based on the first training loss and the second training loss.

FIG. 16 is a schematic structural diagram of a definition recognition apparatus according to an exemplary embodiment of this application. The apparatus may be implemented as all or part of a computer device through software, hardware, or a combination thereof. The apparatus includes:

an acquisition module 1601 configured to acquire content on which definition recognition is to be performed;

a feature extraction module 1602 configured to input the content into a pre-trained feature extraction network in a definition recognition model for feature extraction, to obtain a content feature; the pre-trained feature extraction network being obtained by performing unsupervised pre-training on a feature extraction network in the definition recognition model by using a content set; and

a recognition module 1603 configured to perform definition recognition on the content feature based on a prediction network in the definition recognition model, to obtain a definition level corresponding to the content.

The content includes a video. In a possible implementation, the acquisition module 1601 is configured to acquire a video frame in the video.

In a possible implementation, the feature extraction module 1602 is configured to input the video frame into the pre-trained feature extraction network for feature extraction, to obtain a video frame feature.

In a possible implementation, the recognition module 1603 is configured to perform definition level classification on the video frame feature based on a logistic regression function Sigmoid in the prediction network, to obtain a probability value of the video frame feature at each definition level; determine, according to the probability value, a video frame definition level corresponding to each video frame; and aggregate the video frame definition levels to obtain the definition level corresponding to the video.

In a possible implementation, the recognition module 1603 is configured to group the video frames on which definition recognition is to be performed, and determines video frame definition levels corresponding to the video frames in each group; perform single-weighted average processing on the video frame definition levels in each group, to obtain a video frame group definition level corresponding to each group; and perform double-weighted average processing on the video frame group definition levels corresponding to the groups, to obtain the definition level corresponding to the video.

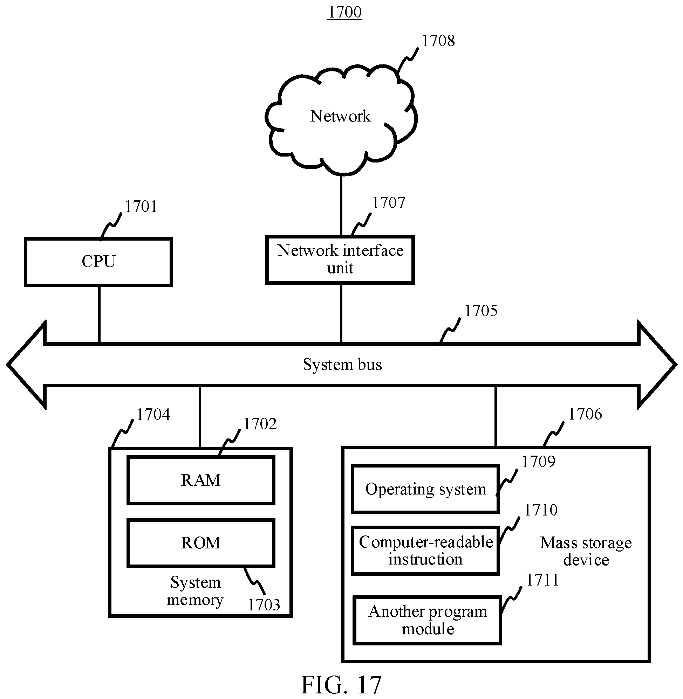

FIG. 17 is a structural block diagram of a computer device 1700 according to an exemplary embodiment of this application. The computer device may be implemented as the server in the foregoing solution in this application. The computer device 1700 includes a central processing unit (CPU) 1701, a system memory 1704 including a random access memory (RAM) 1702 and a read-only memory (ROM) 1703, and a system bus 1705 connecting the system memory 1704 and the CPU 1701. The computer device 1700 further includes a mass storage device 1706 configured to store an operating system 1709, an application program 1710, and another program module 1711.

The mass storage device 1706 is connected to the CPU 1701 by using a mass storage controller (not shown) connected to the system bus 1705. The mass storage device 1706 and a computer-readable medium associated therewith provide non-volatile storage for the computer device 1700. In other words, the mass storage device 1706 may include a computer-readable medium (not shown) such as a hard disk or a compact disc read-only memory (CD-ROM) drive.

Generally, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The computer storage medium includes a RAM, an erasable programmable ROM (EPROM), an electrically-erasable programmable ROM (EEPROM), a flash memory or another solid-state memory technology, a CD-ROM, a digital versatile disc (DVD) or another optical memory, a magnetic cassette, a magnetic tape, a magnetic disk memory, or another magnetic storage device. Certainly, a person skilled in art can know that the computer storage medium is not limited to the foregoing several types. The system memory 1704 and the mass storage device 1706 may be collectively referred to as a memory.

According to the embodiments of the present disclosure, the image computer device 1700 may be further connected, through a network such as the Internet, to a remote computer on the network and run. That is, the computer device 1700 may be connected to a network 1708 by using a network interface unit 1707 connected to the system bus 1705, or may be connected to another type of network or a remote computer system (not shown) by using the network interface unit 1707.

The memory further includes at least one computer-readable instruction. The at least one computer-readable instruction is stored in the memory. The CPU 1701 executes the at least one computer-readable instruction to implement all or part of the operations in the method for training a definition recognition model or the definition recognition method shown in the foregoing embodiments.

An embodiment of this application further provides a computer device. The computer device includes a processor and a memory. The memory stores at least one computer-readable instruction, and the at least one computer-readable instruction is loaded and executed by the processor to implement the method for training a definition recognition model or the definition recognition method provided in the foregoing method embodiments.

An embodiment of this application further provides a computer-readable storage medium. The computer-readable storage medium stores at least one computer-readable instruction, and the at least one computer-readable instruction is loaded and executed by the processor to implement the method for training a definition recognition model or the definition recognition method provided in the foregoing method embodiments.

An embodiment of this application further provides a computer program product. The computer program product includes computer-readable instructions, and the computer-readable instructions are stored in a computer-readable storage medium. The computer-readable instructions are read from the computer-readable storage medium and executed by a processor of a computer device, causing the computer device to perform the method for training a definition recognition model or the definition recognition method provided in the foregoing method embodiments.

In a specific implementation of this application, for related data in user data processing related to user identities or characteristics such as involved multi-modal content, historical data, and portraits, when the foregoing embodiments of this application are applied to a specific product or technology, it is necessary to obtain the user's permission or consent, and collection, usage, and processing of the related data need to comply with relevant laws, regulations, and standards of relevant countries and regions.

Technical features of the foregoing embodiments may be randomly combined. To make description concise, not all possible combinations of the technical features in the foregoing embodiments are described. However, the combinations of these technical features shall be considered as falling within the scope recorded by this specification provided that no conflict exists.

The foregoing embodiments only describe several implementations of this application, which are described specifically and in detail, but cannot be construed as a limitation to the patent scope of this application. For a person of ordinary skill in the art, several transformations and improvements can be made without departing from the idea of this application. These transformations and improvements belong to the protection scope of this application. Therefore, the protection scope of the patent of this application shall be subject to the appended claims.

**Claims**

1. A method for training a definition recognition model, performed by a computer device, the definition recognition model comprising a feature extraction network and a prediction network, and the method comprising:

   acquiring a content set comprising at least one pre-defined content, a sample content, and an annotated definition level of the sample content;
   performing unsupervised pre-training on the feature extraction network based on the pre-defined content to obtain a pre-trained feature extraction network;
   performing definition recognition on the sample content using the pre-trained feature extraction network and the prediction network, to obtain a predicted definition level;
   calculating a training loss based on the predicted definition level and the annotated definition level; and
   updating at least one of a plurality of model parameters of the pre-trained feature extraction network and/or the prediction network according to the training loss.

2. The method according to claim 1, wherein the performing unsupervised pre-training on the feature extraction network based on the pre-defined content to obtain a pre-trained feature extraction network comprises:

   acquiring real distortion content, generative distortion content, and reference content in the content set, the reference content being content in the content set other than the real distortion content and the generative distortion content; and
   performing the unsupervised pre-training on the feature extraction network based on the real distortion content, the generative distortion content, and the reference content, to obtain the pre-trained feature extraction network.

3. The method according to claim 2, wherein the performing the unsupervised pre-training on the feature extraction network based on the real distortion content, the generative distortion content, and the reference content, to obtain the pre-trained feature extraction network comprises:

   acquiring enhanced real distortion content corresponding to the real distortion content and enhanced generative distortion content corresponding to the generative distortion content, wherein when the enhanced real distortion content is compared with the real distortion content, at least one of a distortion type and a distortion degree is changed, and a content type is not changed, and when the enhanced generative distortion content is compared with the generative distortion content, the content type is changed, and the distortion type and the distortion degree are not changed;
   performing feature extraction respectively on the real distortion content, the enhanced real distortion content, and the reference content based on the feature extraction network, to obtain a real distortion content feature corresponding to the real distortion content, an enhanced real distortion content feature corresponding to the enhanced real distortion content, and a reference feature corresponding to the reference content;
   performing calculation based on the real distortion content feature, the enhanced real distortion content feature, and the reference feature, to obtain a first loss function value;
   performing feature extraction respectively on the generative distortion content and the enhanced generative distortion content based on the feature extraction network, to obtain a generative distortion feature corresponding to the generative distortion content and an enhanced generative distortion feature corresponding to the enhanced generative distortion content;
   performing calculation based on the generative distortion feature, the enhanced generative distortion feature, and the reference feature, to obtain a second loss function value; and
   updating at least part of the model parameters in the feature extraction network based on the first loss function value and the second loss function value, to obtain the pre-trained feature extraction network.

4. The method according to claim 3, wherein the feature extraction network comprises a first sub-feature extraction network and a second sub-feature extraction network, the first sub-feature extraction network and the second sub-feature extraction network being two networks having a same structure and different parameters; and
the performing feature extraction respectively on the real distortion content, the enhanced real distortion content, and the reference content based on the feature extraction network, to obtain a real distortion content feature corresponding to the real distortion content, an enhanced real distortion content feature corresponding to the enhanced real distortion content, and a reference feature corresponding to the reference content comprises:

> performing feature extraction on the real distortion content based on the first sub-feature extraction network, to obtain the real distortion content feature;
> performing feature extraction on the enhanced real distortion content based on the second sub-feature extraction network, to obtain the enhanced real distortion content feature; and
> performing feature extraction on the reference content based on the first sub-feature extraction network or the second sub-feature extraction network, to obtain the reference feature.

5. The method according to claim 4, wherein the performing feature extraction on the real distortion content based on the first sub-feature extraction network, to obtain the real distortion content feature comprises:

> convolving the real distortion content based on a first convolutional layer in the first sub-feature extraction network, to obtain a corresponding real distortion content feature map; and
> performing feature extraction on the real distortion content feature map based on a first feature extraction layer in the first sub-feature extraction network, to obtain the real distortion content feature.

6. The method according to claim 4 or 5, wherein the performing feature extraction on the enhanced real distortion content based on the second sub-feature extraction network, to obtain the enhanced real distortion content feature comprises:

> convolving the enhanced real distortion content based on a second convolutional layer in the second sub-feature extraction network, to obtain a corresponding enhanced real distortion content feature map; and
> performing feature extraction on the enhanced real distortion content feature map based on a second feature extraction layer in the second sub-feature extraction network, to obtain the enhanced real distortion content feature.

7. The method according to any one of claims 3 to 6, wherein the performing calculation based on the real distortion content feature, the enhanced real distortion content feature, and the reference feature, to obtain a first loss function value comprises:
calculating the first loss function value based on a first similarity between the real distortion content feature and the enhanced real distortion content feature and a second similarity between the real distortion content feature and the reference feature.

8. The method according to any one of claims 3 to 6, wherein the feature extraction network comprises a first sub-feature extraction network and a second sub-feature extraction network, and the performing feature extraction respectively on the generative distortion content and the enhanced generative distortion content based on the feature extraction network, to obtain a generative distortion feature corresponding to the generative distortion content and an enhanced generative distortion feature corresponding to the enhanced generative distortion content comprises:

> performing feature extraction on the generative distortion content based on the first sub-feature extraction network, to obtain the generative distortion feature; and
> performing feature extraction on the enhanced generative distortion content based on the second sub-feature extraction network, to obtain the enhanced generative distortion feature.

9. The method according to claim 8, wherein the performing feature extraction on the generative distortion content based on the first sub-feature extraction network, to obtain the generative distortion feature comprises:

> convolving the generative distortion content based on a first convolutional layer in the first sub-feature extraction network, to obtain a corresponding generative distortion content feature map; and
> performing feature extraction on the generative distortion content feature map based on a first feature extraction layer in the first sub-feature extraction network, to obtain the generative distortion feature.

10. The method according to claim 8 or 9, wherein the performing feature extraction on the enhanced generative distortion content based on the second sub-feature extraction network, to obtain the enhanced generative distortion feature comprises:

convolving the enhanced generative distortion content based on a second convolutional layer in the second sub-feature extraction network, to obtain a corresponding enhanced generative distortion content feature map; and performing feature extraction on the enhanced generative distortion content feature map based on a second feature extraction layer in the second sub-feature extraction network, to obtain the enhanced generative distortion feature.

11. The method according to any one of claims 3 to 10, wherein the performing calculation based on the generative distortion feature, the enhanced generative distortion feature, and the reference feature, to obtain a second loss function value comprises:

acquiring a third similarity between the generative distortion feature and the enhanced generative distortion feature;
acquiring a fourth similarity between the generative distortion feature and the reference feature; and
calculating the second loss function value based on the third similarity and the fourth similarity.

12. The method according to any one of claims 1 to 11, wherein the pre-trained feature extraction network comprises a first pre-trained sub-feature extraction network and a second pre-trained sub-feature extraction network, the first pre-trained sub-feature extraction network being obtained by performing the unsupervised pre-training on the first sub-feature extraction network, and the second pre-trained sub-feature extraction network being obtained by performing the unsupervised pre-training on the second sub-feature extraction network; and
the performing definition recognition on the sample content by using the pre-trained feature extraction network and the prediction network, to obtain a predicted definition level comprises:

inputting the sample content respectively into the first pre-trained sub-feature extraction network and the second pre-trained sub-feature extraction network for feature extraction, to obtain a first sample content feature, a second sample content feature, and a third sample content feature, the first sample content feature being a feature vector outputted by the first pre-trained sub-feature extraction network and undergoing coefficient adjustment, the second sample content feature being a feature vector outputted by the second pre-trained sub-feature extraction network and undergoing coefficient adjustment, and the third sample content feature being a feature vector outputted by the second pre-trained sub-feature extraction network and not undergoing coefficient adjustment;
performing definition level classification on the third sample content feature based on a logistic regression function in the prediction network, to obtain a probability value of the third sample content feature at each definition level; and
determining the predicted definition level according to the probability value.

13. The method according to claim 12, wherein the training loss comprises a first training loss and a second training loss; and
the calculating a training loss based on the predicted definition level and the annotated definition level comprises:

obtaining the first training loss based on a relative entropy function value between the first sample content feature and the second sample content feature;
obtaining the second training loss based on a cross-entropy function value between the predicted definition level and the annotated definition level; and
obtaining the training loss based on the first training loss and the second training loss.

14. The method according to any one of claims 1 to 13, wherein the content in the content set and the sample content are both multimedia content, the multimedia content comprising at least one of a picture and a video.

15. A definition recognition method, performed by a computer device, the method comprising:

acquiring content on which definition recognition is to be performed;
inputting the content into a pre-trained feature extraction network in a definition recognition model to perform feature extraction, to obtain a content feature, the pre-trained feature extraction network being obtained by performing unsupervised pre-training on a feature extraction network in the definition recognition model by using a content set; and

performing definition recognition on the content feature based on a prediction network in the definition recognition model, to obtain a definition level corresponding to the content.

16. The method according to claim 15, wherein the content comprises a video;

the inputting the content into a pre-trained feature extraction network in a definition recognition model to perform feature extraction, to obtain a content feature comprises:

acquiring a video frame in the video; and

inputting the video frame into the pre-trained feature extraction network for feature extraction, to obtain a video frame feature; and

the performing definition recognition on the content feature based on a prediction network in the definition recognition model, to obtain a definition level corresponding to the content comprises:

performing definition level classification on the video frame feature based on a logistic regression function in the prediction network, to obtain a probability value of the video frame feature at each definition level;

determining, according to the probability value, a video frame definition level corresponding to each video frame; and

aggregating the video frame definition levels to obtain the definition level corresponding to the video.

17. The method according to claim 16, wherein the aggregating the video frame definition levels to obtain the definition level corresponding to the video comprises:

grouping the video frames on which definition recognition is to be performed, and determining video frame definition levels corresponding to the video frames in each group;

performing single-weighted average processing on the video frame definition levels in each group, to obtain a video frame group definition level corresponding to each group; and

performing double-weighted average processing on the video frame group definition levels corresponding to the groups, to obtain the definition level corresponding to the video.

18. An apparatus for training a definition recognition model, the apparatus comprising:

an acquisition module configured to acquire a content set comprising at least one pre-defined content, a sample content, and an annotated definition level of the sample content;

a pre-training module configured to perform unsupervised pre-training on the feature extraction network based on the pre-defined content, to obtain a pre-trained feature extraction network;

a recognition module configured to perform definition recognition on the sample content using the pre-trained feature extraction network and the prediction network, to obtain a predicted definition level;

a calculation module configured to calculate a training loss based on the predicted definition level and the annotated definition level; and

an update module configured to update at least one of a plurality of model parameters of the pre-trained feature extraction network and/or the prediction network according to the training loss.

19. A definition recognition apparatus, the apparatus comprising:

an acquisition module configured to acquire content on which definition recognition is to be performed;

a feature extraction module configured to input the content into a pre-trained feature extraction network in a definition recognition model to perform feature extraction, to obtain a content feature, the pre-trained feature extraction network being obtained by performing unsupervised pre-training on a feature extraction network in the definition recognition model by using a content set; and

a recognition module configured to perform definition recognition on the content feature based on a prediction network in the definition recognition model, to obtain a definition level corresponding to the content.

20. A computer device, the computer device comprising: a processor and a memory, the memory storing at least one computer-readable instruction, the at least one computer-readable instruction being loaded and executed by the processor to implement the method according to any one of claims 1 to 17.

21. A computer storage medium, the computer storage medium storing at least one computer-readable instruction, the at least one computer-readable instruction being loaded and executed by a processor to implement the method according to any one of claims 1 to 17.

22. A computer program product, the computer program product comprising computer-readable instructions, the computer-readable instructions being stored in a computer-readable storage medium, and the computer-readable instructions being read from the computer-readable storage medium and executed by a processor of a computer device, causing the computer device to perform the method according to any one of claims 1 to 17.

FIG. 1

FIG. 2

Acquire a pre-training content set, sample content, and a definition level annotation corresponding to the sample content — 302

Perform unsupervised pre-training on a feature extraction network based on content in a pre-training content set, to obtain a pre-trained feature extraction network — 304

Perform definition recognition on the sample content by using the pre-trained feature extraction network and a prediction network, to obtain a predicted definition level — 306

Calculate a training loss based on the predicted definition level and the definition level annotation — 308

Update at least part of model parameters of at least one of the pre-trained feature extraction network and the prediction network according to the training loss — 310

FIG. 3

Acquire a pre-training content set, sample content, and a definition level annotation corresponding to the sample content — 402

Perform unsupervised pre-training on a feature extraction network based on real distortion content, generative distortion content, and reference content, to obtain a pre-trained feature extraction network — 404

Perform definition recognition on the sample content by using the pre-trained feature extraction network and a prediction network, to obtain a predicted definition level — 406

Calculate a training loss based on the predicted definition level and the definition level annotation — 408

Update at least part of model parameters of at least one of the pre-trained feature extraction network and the prediction network according to the training loss — 410

FIG. 4

FIG. 5

Edge aliasing    White noise      Pixel
601              602          adhesion 603

FIG. 6

(a)　　　　　　　　　　　　(b)

(c)　　　　　　　　　　　　(d)　　　　　　　　　　　　(e)

FIG. 7

Enhanced real distortion
content 802

Real distortion content
801

Reference content 803

FIG. 8

Generative distortion
content 901

Enhanced generative
distortion content 902

FIG. 9

FIG. 10

FIG. 11

| Acquire content on which definition recognition is to be performed | 1202 |

↓

| Input the content into a pre-trained feature extraction network in a definition recognition model for feature extraction, to obtain a content feature | 1204 |

↓

| Perform definition recognition on the content feature based on a prediction network in the definition recognition model, to obtain a definition level corresponding to the content | 1206 |

FIG. 12

| Acquire content on which definition recognition is to be performed | 1302 |

↓

| Acquire a video frame in a video; and input the video frame into a pre-trained feature extraction network for feature extraction, to obtain a video frame feature | 1304 |

↓

| Perform definition recognition on the video frame feature based on a prediction network in the definition recognition model, to obtain a definition level corresponding to the video | 1306 |

FIG. 13

A publishing terminal publishes content 1401 → Picture or video 1402 → Picture, video frame, or cover image → Definition recognition model 1403

Consumption terminal 1405 ← Filter, deprioritize, prioritize ← Definition level 1404

FIG. 14

Acquisition module 1501

Pre-training module 1502

Recognition module 1503

Calculation module 1504

Update module 1505

FIG. 15

Acquisition module 1601

Feature extraction module 1602

Recognition module 1603

FIG. 16

1700

1708

Network

1701

CPU

1707

Network interface
unit

1705

System bus

1704 1702

RAM

ROM

System
memory 1703

1706

1709

Operating system

1710

Computer-readable
instruction

Mass storage
device

1711

Another program
module

FIG. 17

## INTERNATIONAL SEARCH REPORT

| International application No. |
| --- |
| **PCT/CN2023/129311** |

**A.    CLASSIFICATION OF SUBJECT MATTER**

G06V 10/774(2022.01)i;  G06V 10/764(2022.01)i;  G06V 10/766(2022.01)i;  G06V 10/82(2022.01)i;  G06T 7/00(2017.01)i

According to International Patent Classification (IPC) or to both national classification and IPC

**B.    FIELDS SEARCHED**

Minimum documentation searched (classification system followed by classification symbols)

IPC: G06V, G06K, G06T, G06F

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, IEEE: 清晰度, 识别, 模型, 网络, 训练, 标注, 标记, 标签, 无监督, 图像, 视频, 失真, 特征, 提取, 级别, definition, identify, model, training, network, label, unsupervised, image, video, frme, distortion, feature, extraction, level

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111314733 A (BEIJING BAIDU NETCOM SCIENCE AND TECHNOLOGY CO., LTD.) 19 June 2020 (2020-06-19) description, paragraphs 42-66, and claims 1-18 | 1-2, 14-22 |
| A | CN 108898579 A (TENCENT TECHNOLOGY (SHENZHEN) CO., LTD.) 27 November 2018 (2018-11-27) entire document | 1-22 |
| A | CN 114722826 A (PING AN TECHNOLOGY (SHENZHEN) CO., LTD.) 08 July 2022 (2022-07-08) entire document | 1-22 |
| A | CN 113392359 A (TENCENT TECHNOLOGY (SHENZHEN) CO., LTD.) 14 September 2021 (2021-09-14) entire document | 1-22 |
| A | WO 2022067874 A1 (SHENZHEN INSTITUTES OF ADVANCED TECHNOLOGY CHINESE ACADEMY OF SCIENCES) 07 April 2022 (2022-04-07) entire document | 1-22 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 January 2024** | **31 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/129311**

| Patent document cited in search report | | | Publication date (day/month/year) | Patent family member(s) | Publication date (day/month/year) |
|---|---|---|---|---|---|
| CN | 111314733 | A | 19 June 2020 | None | |
| CN | 108898579 | A | 27 November 2018 | None | |
| CN | 114722826 | A | 08 July 2022 | None | |
| CN | 113392359 | A | 14 September 2021 | None | |
| WO | 2022067874 | A1 | 07 April 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104723155